# EUROPEAN PATENT APPLICATION

(11) **EP 4 549 656 A1**
(43) Date of publication of application: **07.05.2025**
(21) Application number: 23830568.4
(22) Date of filing: 28.06.2023
(51) Int. Cl.: E01C 11/26, E01C 7/30, C04B 26/16

(54) **MATERIAL FOR NOISE-ABSORBING SURFACING AND PRODUCTION METHOD THEREFOR**

(30) Priority: 29.06.2022 ES 202230585
(71) Applicant: Reciclaje De Neumaticos Y Cauchos S.L., 30562 Ceuti (ES); Synthelast S.A., 03295 Elche (ES)
(72) Inventor: CANDELA GONZÁLEZ, Pablo, 30562 CEUTÍ (ES); CORDOBA CANDELA, Maria Teresa, 03295 ELCHE (ES)
(74) Representative: Díaz Pacheco, Maria Desamparados
(86) International application number: PCT/ES2023/070419
(87) International publication number: WO 2024/003435

(57) **Abstract**

The invention relates to a material for noise-absorbing surfacing, which comprises a mixture of a first component (A) and a second component (B), characterized in that the first component (A) comprises 40-50 wt% ground SBR rubber with a size less than 6 mm, 38-42% ground mineral aggregate with a size less than 8 mm, 10-20% polyurethane resin, and 3-4% glycol, the ground SBR rubber granules and the ground mineral granules being encapsulated by the polyurethane resin; and the second component (B) comprises 50-56% isocyanate and 38-45% polyether polyol.

The invention also relates to a method for producing a material for noise-absorbing surfacing, characterized in that it comprises producing the first component, which comprises the step of encapsulating the ground SBR rubber granules and the ground mineral aggregate granules using the polyurethane resin by means of a mixer; and producing the second component, which comprises the step of introducing the isocyanate and the polyether polyol into a reactor at a temperature of between 50-80°C.

## Description

### OBJECT OF THE INVENTION

The present invention belongs to the field of materials based on rubber of the type currently used in playgrounds and other public spaces such as courts for playing sports, gymnasiums, daycare centers, roadways, etc.

A first object of the present invention relates to a novel material with improved durability, wear resistance, and noise and impact absorption characteristics.

A second object of the present invention relates to a method for producing the aforementioned material.

### BACKGROUND OF THE INVENTION

The use of materials based on granulated rubber for producing surfacings for playgrounds, tree surrounds, courts for playing sports, and many other uses, has been known for quite some time. These materials typically comprise two components: a first component based on ground rubber; and a second component based on a binder resin.

The first component usually comprises a synthetic rubber known as SBR (Styrene Butadiene Rubber), which is obtained by means of polymerizing a mixture of butadiene and styrene. The rubber comes in many cases from the recycling of tire scrap, which is ground and marketed for various applications.

The second component typically comprises a polyurethane resin. Polyurethane resins have a wide range of uses due to their rapid solidification and high adhesion to different types of surfaces. Polyurethane resins are typically divided into two types based on the properties of their liquid compounds: isocyanates and polyols. In most cases, the resins used in these materials comprise both types of compounds.

These two components are mixed at a time immediately prior to the application of the surfacing so that, once the material has been applied to the desired surface, a step of curing the resin takes place, providing stability and durability to the granulated rubber. Surfacings produced from materials of this type have impact absorbing properties, high durability, and ease of repair.

Although these materials are advantageous for many applications, their main drawback is their low durability and wear resistance. Moreover, while conventional surfacings such as asphalt are durable and wear resistant, their noise and impact absorption characteristics are not suitable for certain applications.

In short, there is a need in this field for novel compositions that combine durability and wear resistance with good noise and impact absorption characteristics.

### DESCRIPTION OF THE INVENTION

The inventors of the present invention have developed a new material for surfacings the composition of which is particularly advantageous in terms of durability and noise reduction. Specifically, the new material exhibits improved noise and impact absorption characteristics compared to a conventional surfacing, such as for example asphalt, and also improved durability and wear performance compared to a conventional rubber surfacing, such as for example that used in playgrounds and the like. This improvement has been achieved by means of adding to the first component a ground mineral aggregate, such as silica or the like, and also by means of encapsulating the SBR and mineral granules using a resin. That is, the first component consists of a mixture of SBR and mineral aggregate granules which are coated with a layer of resin. The inventors of the present application have found that this configuration combined with the percentages and sizes described herein allow very good noise absorption characteristics to be obtained while maintaining the durability and resistance characteristics of a conventional surfacing and improving the transit and serviceability characteristics.

A first aspect of the invention relates to a material for noise-absorbing surfacing, which comprises a mixture of a first component and a second component, which are characterized in that:
a) The second component (B) makes up 10-20 wt% of the first component (A).
b) The first component (A) comprises:
   - 40-50 wt% ground SBR rubber with a size less than 6 mm,
   - 38-42% ground aggregate, such as for example silica, with a size less than 8 mm,
   - 10-20% polyurethane resin, and
   - 3-4% glycol.
   Furthermore, in this first component the ground SBR rubber granules and the ground aggregate granules are encapsulated by the polyurethane resin.
c) The second component (B) comprises 50-56% isocyanate and 38-45% polyether polyol.

As described in detail hereinbelow, this composition provides a surfacing with particularly good noise absorption characteristics. This good noise performance is thought to be due to a combination of several factors, including the percentage and particle size distribution of the SBR used, the encapsulation of the SBR and mineral aggregate granules, and the presence of air voids within the surfacing.

The present invention also relates to a noise-absorbing surfacing produced by means of the material described above.

A second aspect of the invention relates to a method for producing a material for noise-absorbing surfacing as described hereinabove. This method is characterized by:
1. Producing the first component which comprises the step of encapsulating the ground SBR rubber granules and the ground mineral aggregate granules using the polyurethane resin by means of a mixer.
2. Producing the second component which comprises the step of introducing the isocyanate and the polyether polyol into a reactor at a temperature of between 50-80°C.

### PREFERRED EMBODIMENT OF THE INVENTION

Described below is an example of a material for noise-absorbing surfacing consisting of two components: a first component (A) and a second component (B).

### First component

The first component (A) consists of a mixture of SBR rubber, mineral aggregate, polyurethane resin of aromatic origin, and glycol.

As mentioned above, SBR rubber is a synthetic rubber commonly used for producing tire casings, such that the SBR rubber used in the material of the present invention can be obtained from the recycling of tires. For this purpose, the casings are subjected to a grinding process until achieving a particle size distribution of less than 6 mm, i.e., it passes through a sieve with a mesh size of 6 mm. In this example, ground SBR makes up 47 wt% of the first component (A).

The mineral aggregate may, in principle, be any type of aggregate having a particle size distribution less than 8 mm. By way of example, it is possible to use suitably sieved silica sand to obtain the desired sizes. In this example, ground mineral aggregate makes up 40% of the first component.

The first component (A) further comprises 12 wt% polyurethane resin and 3 wt% glycol.

To obtain the first component (A), the SBR rubber and the mineral aggregate are first mixed with the polyurethane resin and glycol in the mentioned proportions by means of introducing same into a mixer for a time which can be about 50 minutes each 300 kg. The mixture obtained is then cooled and put in bags.

### Second component

As mentioned above, the second component (B) is a polyurethane binder resin of aromatic origin consisting of the mixture of two substances: aromatic isocyanate and polyether polyol. This second component (B) is produced by introducing the isocyanate, the polyether polyol and additives into a reactor at a temperature of between 50-80°C for a time of between 50-75 minutes every two tons.

Starting from the two components mentioned above, the material is formed by mixing the two components at ratios of 100/14 by weight (first component (A)/second component (B)). This material is applied to the surface in question to promote noise absorption.

A test carried out to check the performance of such a material with respect to the noise caused by the rolling of a vehicle is described below. To that end, a layer of the material described was applied to form a stretch of roadway about 30 meters long. The noise generated by the rolling of the vehicle on this stretch formed by the material of the invention was compared with the noise generated by the same vehicle on a stretch of the same length formed by a surfacing based on a conventional asphalt mixture.

The test methodology used for the acoustic characterization of the surfacing of the invention corresponds to a simplification of the CPX method (close-proximity method), as described in standard ISO 11819 part 2, which is used to determine the influence of the road surface on traffic noise.

Following standard recommendations, two microphones are used to perform these tests, coupled to the rear wheel of the vehicle by means of an axle and a bearing, as shown in the image on the following page. This device also allows the sensors to be positioned in a stable manner and thus record the noise generated by the tire-ground interaction.

For each of the stretches analyzed, measurements were taken at different speeds (20, 30, 40, and 50 kilometers per hour), making 3 recordings during a 20-meter-long run, for each of the hypotheses considered. In addition, to guarantee a minimum influence of the vehicle's propulsion system, the measurements were taken with the engine off, previously reaching the desired speed.

Based on the above considerations, the following table shows, for each of the test speeds, the results obtained after performing the CPX test. It also includes, comparatively, the difference in results obtained in each of the surfacings analyzed.

| **Test speed (km/h)** | **Control stretch (asphalt) (dBA)** | **Surfacing of the invention (dBA)** | **Difference (dBA)** |
|---|---|---|---|
| **20** | 83.9 | 73.3 | 10.6 |
| **30** | 89.6 | 79.5 | 10.1 |
| **40** | 94.2 | 86.3 | 7.9 |
| **50** | 96.5 | 89.7 | 6.8 |

As can be seen, in all the hypotheses analyzed, the surfacing of the present invention exhibits a CPX index lower than that of a traditional asphalt, obtaining a reduced noise index comprised between 10.6 and 6.8 dBA, for speeds between 20 and 50 km/h. These differences are particularly noticeable at lower speeds of 20 and 30 km/h, where vehicle noise has been reduced by more than 10 dBA.

In short, it has been demonstrated that the application of the surfacing of the invention will lead to an improved acoustic performance of the surfacing, with a significant reduction in traffic noise.

## Claims

1. A material for noise-absorbing surfacing, which comprises a mixture of a first component (A) and a second component (B), **characterized in that**:
- the second component (B) makes up 10-20 wt% of the first component (A);
- the first component (A) comprises 40-50 wt% ground SBR rubber with a size less than 6 mm, 38-42% ground mineral aggregate with a size less than 8 mm, 10-20% polyurethane resin, and 3-4% glycol, the ground SBR rubber granules and the ground mineral granules being encapsulated by the polyurethane resin; and
- the second component (B) comprises 50-56% isocyanate and 38-45% polyether polyol.

2. A noise-absorbing surfacing produced by means of the material according to claim 1.

3. A method for producing a material for noise-absorbing surfacing according to claim 1, **characterized in that** it comprises:
- producing the first component, which comprises the step of encapsulating the ground SBR rubber granules and the ground mineral aggregate granules using the polyurethane resin by means of a mixer; and
- producing the second component, which comprises the step of introducing the isocyanate and the polyether polyol into a reactor at a temperature of between 50-80°C.
